Europäisches Patentamt

European Patent Office

Office européen des brevets

(19)

(11) Veröffentlichungsnummer: **0 200 097**
A2

# (12) EUROPÄISCHE PATENTANMELDUNG

(21) Anmeldenummer: **86105260.3**

(22) Anmeldetag: **16.04.86**

(51) Int. Cl.⁴: **B 01 D 29/04**
B 07 B 1/46, B 01 D 35/28

(30) Priorität: **03.05.85 DE 3515891**

(43) Veröffentlichungstag der Anmeldung:
**05.11.86 Patentblatt 86/45**

(84) Benannte Vertragsstaaten:
**AT BE CH DE FR GB IT LI NL SE**

(71) Anmelder: **Hein, Lehmann Aktiengesellschaft**
**Fichtenstrasse 75**
**D-4000 Düsseldorf 1(DE)**

(71) Anmelder: **Isenmann Drahterzeugnisse GmbH**
**Gerwigstrasse 67**
**D-7500 Karlsruhe(DE)**

(72) Erfinder: **Schmidt, Gerhard**
**Eichenweg 15**
**D-7505 Ettlingen(DE)**

(72) Erfinder: **Neukam, Christian**
**Friedrich-Naumann-Strasse 52**
**D-7500 Karlsruhe 21(DE)**

(72) Erfinder: **Schmidt, Heinrich, Dipl.-Ing.**
**Artusstrasse 64**
**D-4000 Düsseldorf 30(DE)**

(74) Vertreter: **Patentanwaltsbüro Cohausz & Florack**
**Postfach 14 01 47**
**D-4000 Düsseldorf 1(DE)**

(54) **Siebvorrichtung.**

(57) Dei Erfindung betrifft ein Verfahren zum Herstellen eines rechteckförmigen Siebelements aus Kunststoff oder gummielastischem Material, das mit mindestens zwei Rändern an der Siebmaschinenunterkonstruktion direkt neben weiteren Siebelementen lösbar befestigbar ist. Das Siebelement weist eine flexible Siebfläche geringer Dicke auf, die rundum an einem Rand befestigt wird, dessen Höhe ein Mehrfaches der Dicke der Siebfläche beträgt und der als Armierung einen Rahmen aufweist. Die Siebfläche (1) wird vor ihrer Befestigung in Richtung ihrer Länge und Breite gespannt und in diesem vorgespannten Zustand am Rahmen (3) oder Rand (2) befestigt.

EP 0 200 097 A2

Croydon Printing Company Ltd

# COHAUSZ & FLORACK

**PATENTANWALTSBÜRO**

**SCHUMANNSTR. 97  D-4000 DÜSSELDORF 1**

Telefon: (0211) 683346 · Telefax: (0211) 6790871 · Telex: 8586513 cop d

---

**PATENTANWÄLTE:**

Dipl.-Ing. W. COHAUSZ · Dipl.-Ing. R. KNAUF · Dipl.-Ing. H. B. COHAUSZ · Dipl.-Ing. D. H. WERNER · Dr. rer. nat. B. REDIES

0200097

11.04.1986

HC/Sr 85/506EP

- 1 -

Hein, Lehmann AG          und          Isenmann Drahterzeugnisse GmbH

Fichtenstraße 75                       Gerwigstraße 67

4000 Düsseldorf 1                      7500 Karlsruhe

Verfahren zum Herstellen eines Siebelements und
Siebelement nach diesem Verfahren

Aus der DE-OS 28 49 838 ist ein Siebbelag bekannt, der aus
einzelnen Kunststoffsiebelementen zusammengesetzt ist. Der
rundum verlaufende Rand jedes Siebelementes weist eine
größere Dicke auf als die dazwischen liegende Siebfläche.
Die Siebfläche besitzt nach unten ragende
Verstärkungsrippen. Eine solch kräftig ausgeführte
Siebfläche erheblicher Dicke ist im wesentlichen ein starres
Element, das bis auf unbedeutende Abweichungen im
wesentlichen in derselben Weise schwingt wie der
Siebelementenrand, und damit der gesamte Siebbelag, der von
der Siebmaschine in Schwingungen versetzt wird. Auch
ist es bekannt, die Siebränder zur Verstärkung mit
Armierungseisen zu versehen.

Das Trockenabsieben von feinkörnigem Gut, wie Brechsand,
mit diesen bekannten Siebelementen gestaltet sich besonders
in Regenperioden oder den Jahreszeiten mit hoher
Luftfeuchtigkeit als sehr schwierig. Der Steinmehlanteil
im Aufgabegut nimmt Feuchtigkeit auf und setzt den
Siebbelag zu. Um dieses Anbacken auf dem Siebbelag zu vermeiden, sind folgende Lösungen bekannt:

1. Siebmaschinen mit Quertraversen, die den Siebbelag abwechselnd stauchen und strecken.

2. Harfensiebe, bei denen die einzelnen Drähte eine Eigenschwingung zusätzlich zur Schwingung der Maschine entwickeln und damit den Siebbelag verstopfungsfrei halten. Der Verschleiß ist relativ hoch.

3. Kunststoffsiebe, bei denen die einzelnen Sieböffnungen nicht als quadratisches, rundes oder rechteckiges Loch ausgebildet sind, sondern die Form eines U haben. Die aus der U-Form sich ergebende Lippe soll ähnlich dem Harfensieb eine eigene, zusätzliche Schwingung entwickeln und den Siebbelag freihalten. Die sich ständig verändernde Sieböffnung aufgrund der Bewegung der Zunge führt zu einer Ungenauigkeit der Trenngrenze.

4. Kunststoffsiebbeläge mit einer dünnen, gelochten Matte, die auf dem Belag nur an den äußeren Rändern befestigt ist und im Siebbodenbereich lose auf der Unterkonstruktion aufliegt. Durch die Schwingungsbewegung der Maschine kommt der lose Bereich der Matte in Bewegung und klopft auf die Unterkonstruktion bei jeder Bewegung. Die flatternde Bewegung der Matte soll einen Selbstreinigungseffekt erzielen. Die von der Maschine aufgebrachte Energie reicht aber nicht aus, die gesamte Matte in eine Flatterschwingung zu bringen. Auch führt die örtlich begrenzte Flatterbewegung durch die Dauerbiegebelastung der Matte an der gleichen Stelle zum vorzeitigen Bruch.

5. Klopfvorrichtungen verschiedenster Konstruktionsarten unter den Siebbelägen, um dem Zuwachsen der Siebbeläge durch feuchtes Feingut entgegenzuwirken.

- 3 -

Auch sind unter Spannung stehende Siebmatten an sich bekannt, wie dies die DE-OS 22 40 051 zeigt. Die Montage solcher Siebbeläge ist aufwendig.

Aufgabe der Erfindung ist es, einen Siebbelag der eingangs genannten Art derart zu verbessern, daß bei einfachster Siebelemente diese auch bei siebschwierigem Gut verstopfungsfrei gehalten werden.

Diese Aufgabe wird erfindungsgemäß dadurch gelöst, daß die Siebfläche vor ihrer Befestigung in Richtung ihrer Länge und Breite gespannt und in diesem vorgespannten Zustand am Rahmen oder Rand befestigt wird.

Bei einem solchen Siebbelag ist es nicht erforderlich, den gesamten Siebbelag vorzuspannen, sondern die Spannung der siebwirksamen Bereiche wird durch die einzelnen Siebelemente erzeugt. Diese siebwirksamen Flächen werden durch das Schwingen der Siebmaschine und durch das rhythmische Aufprallen des Siebgutes ähnlich einem Trampolin in Schwingungen versetzt, die die Sieböffnungen freihalten. Hierbei werden zusätzlich die Vorteile erreicht, daß der Siebbelag aufs Einfachste montierbar und demontierbar ist, die Siebelemente einfach und preiswert hergestellt werden können und bei geringstem Verschleiß genau definierte Bewegungen des Siebbelages erzeugt werden.

Vorteilhafte Ausgestaltungen der Erfindung sind in den Unteransprüchen aufgeführt.

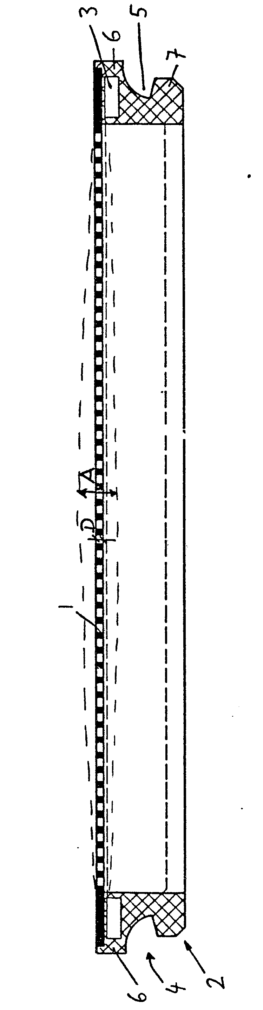

Ein Ausführungsbeispiel eines einzelnen Siebelementes ist in der Zeichnung in einem senkrechten Schnitt dargestellt und wird im folgenden näher beschrieben.

Eine mit Sieböffnungen versehene Siebfläche 1 (Spannmatte) weist eine Dicke von ca. 3 bis 10 mm auf und ist aufgrund dieser verhältnismäßig geringen Dicke flexibel. Diese Siebfläche 1 aus Kunststoff, insbesondere Polyurethan, ist mit ihrem Rand 1a auf der Oberseite eines Randprofiles 2 befestigt, das ringsum der rechteckförmigen Siebfläche 1 verläuft. Das Randprofil 2 besteht auch aus Kunststoff, insbesondere Polyurethan und umschließt einen Rahmen 3 aus Stahl, insbesondere Federstahl und/oder Glasfaserkunststoff.

Diese rundum verlaufende rahmenförmige Armierung 3 bewirkt auf die Siebfläche 1 eine Spannung, da während der Herstellung dafür gesorgt wird, daß die Siebfläche 1 vor ihrer Befestigung am Randprofil 2, insbesondere am Rahmen 3 eine Vorspannung erhält. Diese Vorspannung beträgt mindestens 1% der Länge bzw. Breite der Siebfläche 1.

Dieses aus Siebfläche 1 und Randprofil 2 bestehende Siebelement wird in der Weise hergestellt, daß die rechteckförmige Siebfläche 1 und der Rahmen 3 getrennt vorgefertigt werden, um danach in eine Form gelegt zu werden, deren Hohlraum dem Randprofil 2 entspricht. Der Rahmen 3 wird nach innen vorgespannt und die Form mit Kunststoff, insbesondere Polyurethan ausgefüllt. Nach Erhärten des Kunststoffs und Herausnahme des Siebelements erzeugt der Rahmen 3 auf allen vier Seiten eine Spannung der Siebfläche 1 nach außen, so daß die Siebfläche 1 ähnlich einem Trampolin oder einem Trommelfell gespannt ist. Die von der Siebmaschine auf den Siebbelag wirkenden Schwingungen erzeugen Schwingungen der Siebfläche 1 mit einer Amplitude A, die größer ist als die Dicke D der Siebfläche.

Das Material des Randprofils 2 verbindet nicht nur Siebfläche 1 und Rahmen 3 miteinander, sondern sorgt auch für eine Verbindung des gesamten Siebelementes mit der Siebmaschine. Hierzu weist die seitliche senkrechte Stirnseite 4 des Randprofils 2 einen Rücksprung 5 zwischen einem oberen Vorsprung 6 und einem unteren Vorsprung 7 auf, so daß das Randprofil 2 mit seinem Rücksprung 5 an einem nicht dargestellten Vorsprung einer Leiste einrasten kann.

Der Rahmen 3 liegt oberhalb des Rücksprungs 5 und knapp unterhalb des keine Sieböffnungen aufweisenden Randes der Siebfläche 1, so daß der Rahmen 3 die Vorspannung direkt auf dem kürzesten Weg auf die Siebfläche 1 ausübt.

# COHAUSZ & FLORACK

**PATENTANWALTSBÜRO**

**SCHUMANNSTR. 97  D-4000 DÜSSELDORF 1**

Telefon: (0211) 683346 · Telefax: (0211) 6790871 · Telex: 8586513 cop d

PATENTANWÄLTE:

Dipl.-Ing. W. COHAUSZ · Dipl.-Ing. R. KNAUF · Dipl.-Ing. H. B. COHAUSZ · Dipl.-Ing. D. H. WERNER · Dr. rer. nat. B. REDIES

0200097

11.04.1986
HC/Sr 85/506EP

– 6 –

## Ansprüche

1. Verfahren zum Herstellen eines rechteckförmigen Siebelements aus Kunststoff oder gummielastischem Material, das mit mindestens zwei Rändern an der Siebmaschinenunterkonstruktion direkt neben weiteren Siebelementen lösbar befestigbar ist, wobei es eine flexible Siebfläche geringer Dicke aufweist, die rundum an einem Rand befestigt wird, dessen Höhe ein Mehrfaches der Dicke der Siebfläche beträgt und der als Armierung einen Rahmen aufweist,
d a d u r c h   g e k e n n z e i c h n e t , daß die Siebfläche (1) vor ihrer Befestigung in Richtung ihrer Länge und Breite gespannt und in diesem vorgespannten Zustand am Rahmen (3) oder Rand (2) befestigt wird.

2. Verfahren nach Anspruch 1,
d a d u r c h   g e k e n n z e i c h n e t , daß auf die vorgespannte Siebfläche der Rand (2) mit seinem Rahmen (3) aufgegossen wird.

3. Verfahren nach Anspruch 1,
d a d u r c h   g e k e n n z e i c h n e t , daß die Siebfläche (1) im vorgespannten Zustand auf den Rahmen (3) oder Rand (2) aufgeklebt, aufvulkanisiert oder aufgeschmolzen wird.

4. Verfahren nach einem der Ansprüche 1 bis 3,
d a d u r c h   g e k e n n z e i c h n e t , daß die

Siebfläche (1) um mindestens 1% ihrer Länge und/oder Breite vorgespannt wird.

5. Verfahren nach einem der Ansprüche 1 bis 4, **d a d u r c h   g e k e n n z e i c h n e t** , daß Siebfläche (1) und Rahmen (3) voneinander getrennt hergestellt und durch das Material des Rahmens (2) miteinander verbunden werden.

6. Siebelement hergestellt in einem Verfahren nach einem der Ansprüche 1 bis 5, **d a d u r c h   g e k e n n z e i c h n e t** , daß die Armierung des Randes (2) einen vierseitigen Rahmen (3) bildet, der die Spannung der vorgespannten Siebfläche (1) dauerhaft aufrecht erhält.

7. Siebelement nach Anspruch 6, **d a d u r c h   g e k e n n z e i c h n e t** , daß die Dicke der gespannten Siebfläche (1) so gering ist, daß diese im mittleren Bereich mit einer Amplitude (A) gegenüber dem Rand schwingt, die größer der Dicke (D) der Siebfläche ist.

8. Siebelement nach Anspruch 6 oder 7, **d a d u r c h   g e k e n n z e i c h n e t** , daß der im Kunststoff des Randes (2) eingebettete rechteckförmige Rahmen (3) aus Stahl und/oder Glasfaserkunststoff besteht.

9. Siebelement nach Anspruch 8, **d a d u r c h   g e k e n n z e i c h n e t** , daß der Stahl ein Federstahl ist.

10. Siebelement nach einem der Ansprüche 6 bis 9, **d a d u r c h   g e k e n n z e i c h n e t** , daß Rand (2) und Siebfläche (1) aus demselben Kunststoff, insbesondere aus Polyurethan oder gummielastischem Material bestehen.

11. Siebbelag nach einem der Ansprüche 6 bis 10, d a d u r c h  g e k e n n z e i c h n e t , daß die seitlichen Stirnseiten (4) der Siebelementenlängsränder Vor- und/oder Rücksprünge aufweisen, mit denen sie an der Unterkonstruktion, an Zwischenleisten oder an benachbarten Siebelementen befestigbar sind.